# EUROPÄISCHE PATENTSCHRIFT

(11) **EP 3 096 039 B1**
(45) Veröffentlichungstag und Bekanntmachung des Hinweises auf die Patenterteilung: **26.08.2020**
(21) Anmeldenummer: 16170590.0
(22) Anmeldetag: 20.05.2016
(51) Int. Cl.: F16D 48/06

(54) **KUPPLUNG, KUPPLUNGSANORDNUNG UND ARBEITSMASCHINE**
COUPLING, COUPLING ASSEMBLY AND WORKING MACHINE
COUPLAGE, AGENCEMENT DE COUPLAGE ET MACHINE DE TRAVAIL

(30) Priorität: 20.05.2015 DE 102015107932; 07.04.2016 DE 102016106367
(43) Veröffentlichungstag der Anmeldung: 23.11.2016
(73) Patentinhaber: Desch Antriebstechnik GmbH & Co. KG, 59759 Arnsberg (DE)
(72) Erfinder: Geilker, Uwe, 59757 Arnsberg (DE)
(74) Vertreter: Basfeld, Rainer

(56) Entgegenhaltungen:
- DE-A1-102007 034 203
- FR-A1- 2 907 867
- FR-A1- 2 908 484
- GB-A- 2 324 583

## Beschreibung

Die vorliegende Erfindung betrifft eine Arbeitsmaschine gemäß dem Oberbegriff des Anspruchs 1.

Eine Kupplung der vorgenannten Art ist hinreichend bekannt, beispielsweise aus der EP 1 559 922 B1.

GB 2 324 583 A, DE 10 2007 034 203 A1, FR 2 908 484 A1 und FR 2 907 867 A1 offenbaren jeweils ein Kraftfahrzeug mit einer Kupplung und einem Zustandsüberwachungsmittel.

Eine Kupplung im Betrieb unterliegt einem Verschleiß bzw. es besteht ein Interesse an einer möglichst vorausschauenden Instandhaltungsplanung einer Kupplung.

Hier setzt die vorliegende Erfindung an und macht es sich zur Aufgabe eine verbesserte Kupplung vorzuschlagen, insbesondere eine Kupplung bereitzustellen, mit der eine möglichst vorausschauende Instandhaltungsplanung möglich ist.

Erfindungsgemäß wird diese Aufgabe durch eine Arbeitsmaschine mit den kennzeichnenden Merkmalen des Anspruchs 1 dadurch gelöst, dass bei der Arbeitsmaschine eine Kupplungsanordnung mit einerKupplung, die mit mindestens einem Zustandsüberwachungsmittel ausgestattet ist, zum Einsatz kommt. Hierdurch wird die Möglichkeit einer Echtzeitmessung von Zustandsgrößen der Kupplung eröffnet, wie beispielsweise Temperatur, Betriebsdruck, Drehmoment, Reibbelagsverschleiß, Drehzahl, Schwingungen und / oder ganz allgemein Abstände. Aus diesen gemessenen Größen können Rückschlüsse auf den Verschleißzustand der Kupplung gezogen werden und die Instandhaltung kann an den tatsächlichen Gegebenheiten der Kupplung ausgerichtet werden. Ferner können auch Optimierungen im Zusammenspiel der Kupplung mit Komponenten einer Arbeitsmaschine, in welcher die Kupplung verbaut ist, vorgenommen werden, beispielsweise die Optimierung der Auslastung eines Antriebsmittels einer Arbeitsmaschine oder die Erfassung der Istzustände der Kupplung selber, wie Kupplung geöffnet oder Kupplung geschlossen.

Die Kupplung der Kupplungsanordnung ist in den Antriebsstrang der Arbeitsmaschine integriert, sprich zwischen Antriebsmittel, beispielsweise einem Dieselmotor, und dem Arbeitsmittel zwischengeschaltet. Bei dem Arbeitsmittel kann es sich beispielsweise um das Zerkleinerungswerk einer Straßenbaumaschine, den Antrieb eines Schiffes oder den Schneckenförderer eines Extruders handeln. Die Auswerteeinrichtung kann in die Maschinensteuerung integriert sein. Letztendlich können hier die durch die Kupplung bzw. Kupplungsanordnung erlangten Vorteile genutzt werden. Rein beispielhaft kann beispielsweise der Anlagendruck verändert werden, wenn der Betriebsdruck und das Drehmoment der Kupplung steigen oder wenn lediglich das Drehmoment steigt, wird die Materialzufuhr zum Zerkleinerer oder zum Schneckenförderer gedrosselt. Die Möglichkeiten und Kombinationen sind sehr umfangreich.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

Zusammen mit der Auswerteeinrichtung, bei der es sich um einen Computer mit der entsprechenden Software handeln kann, kann die Kupplung die entsprechenden Daten liefern, die beispielsweise dazu verwendet werden können, einen Instandhaltungsplan in Abhängigkeit von dem tatsächlichen Verschleißzustand der Kupplungsscheiben zu generieren, über die Temperaturmessung eine Überwachung des Schlupfes der Kupplung, insbesondere des Mikroschlupfes, vorzunehmen und/oder über das gemessene Drehmoment eine Optimierung der Auslastung einer Arbeitsmaschine vorzunehmen. Grundsätzlich können hierzu auch weitere gemessene Werte einfließen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

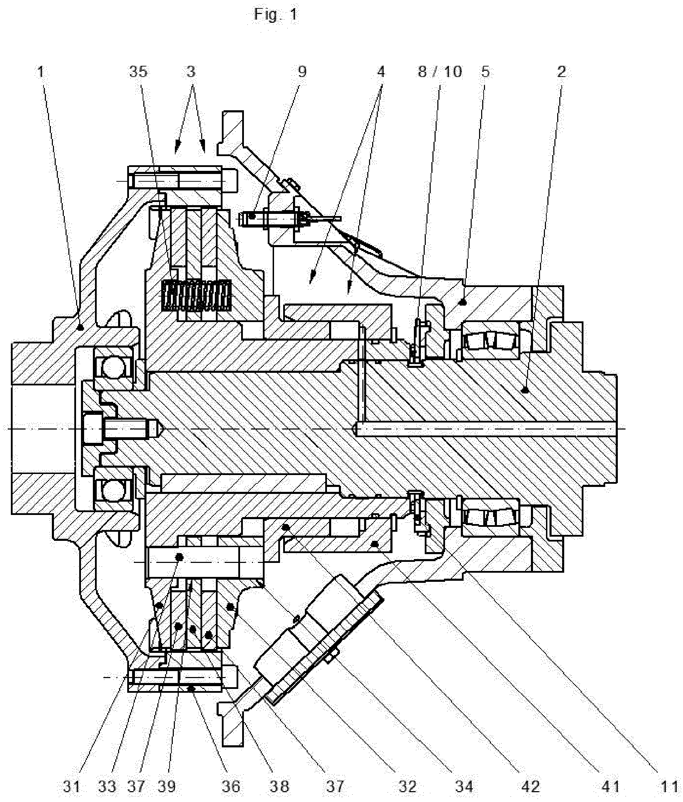

- Fig. 1: eine erfindungsgemäße Kupplung in einer Querschnittdarstellung;

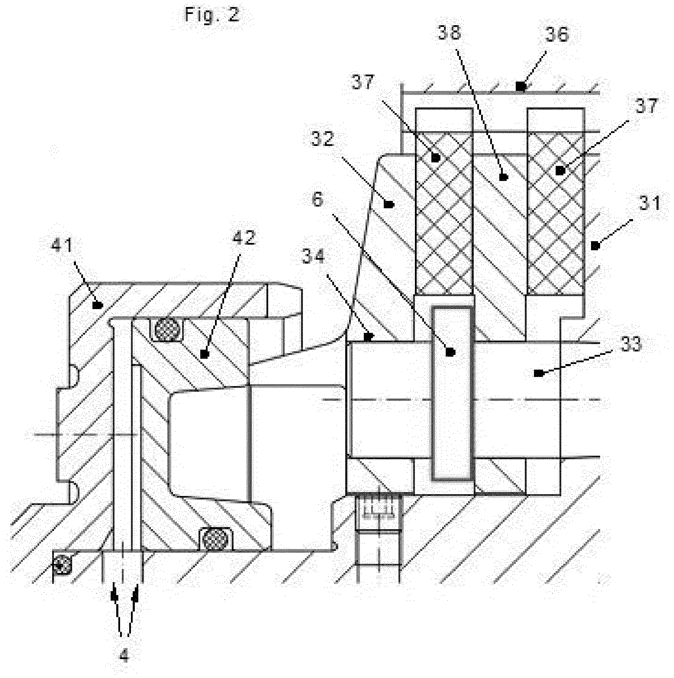

- Fig. 2: eine Detailvergrößerung einer erfindungsgemäßen Kupplung mit einer bevorzugten Position eines Temperaturüberwachungsmittels;

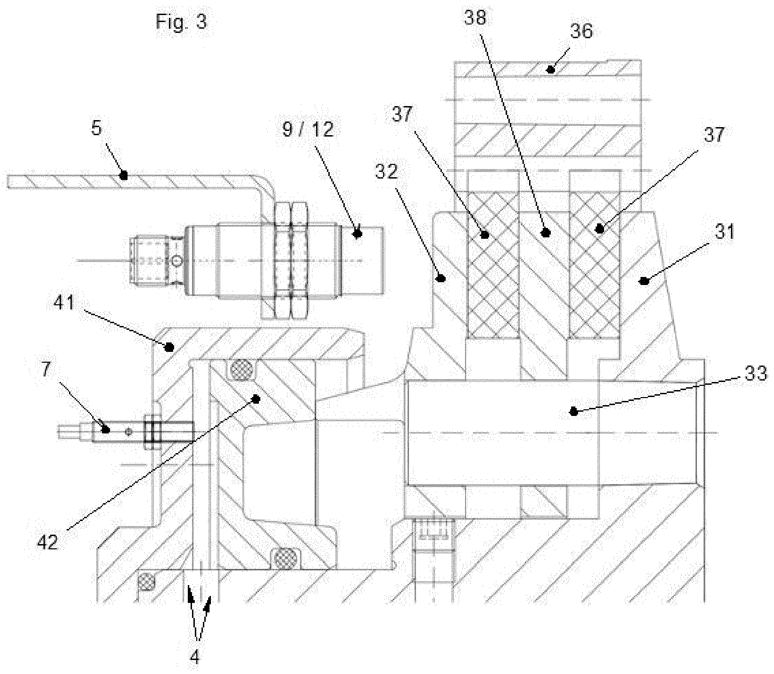

- Fig. 3: eine Detailvergrößerung einer erfindungsgemäßen Kupplung mit einer bevorzugten Position eines Drucküberwachungsmittels und eines Reibbelagsverschleißüberwachungsmittels bzw. Weg-, Abstand- und/oder Positionsüberwachungsmittels;

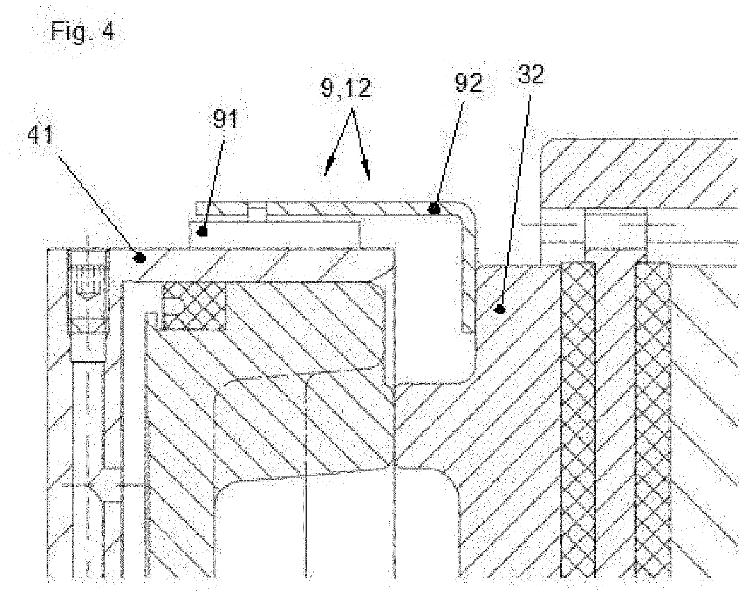

- Fig. 4: eine Detailvergrößerung einer erfindungsgemäßen Kupplung mit einer bevorzugten Position eines Reibbelagsverschleißüberwachungsmittels bzw. Weg-, Abstand- und/oder Positionsüberwachungsmittels;

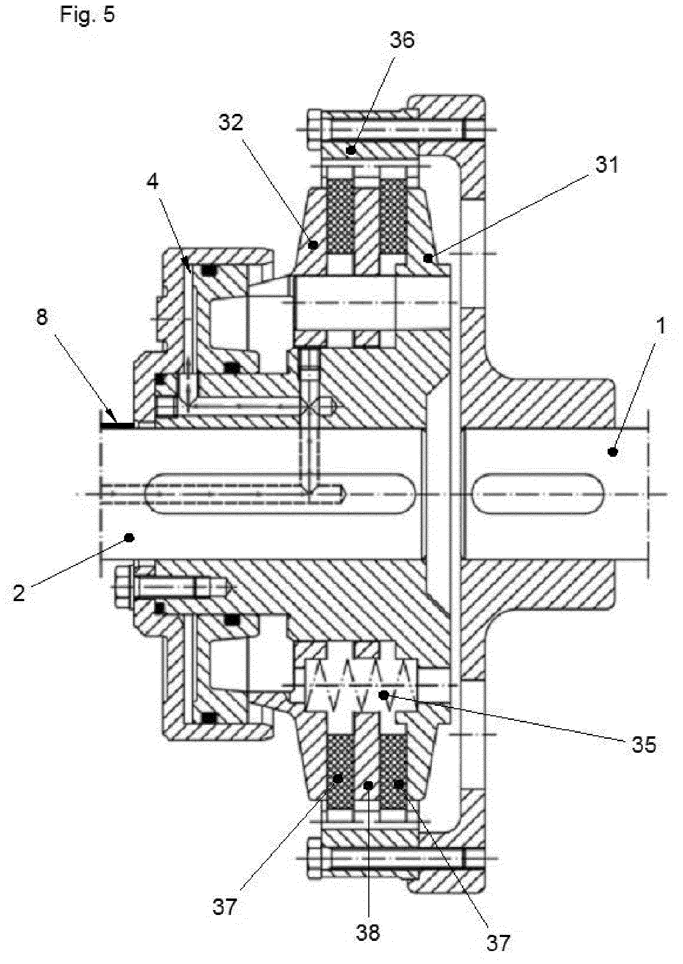

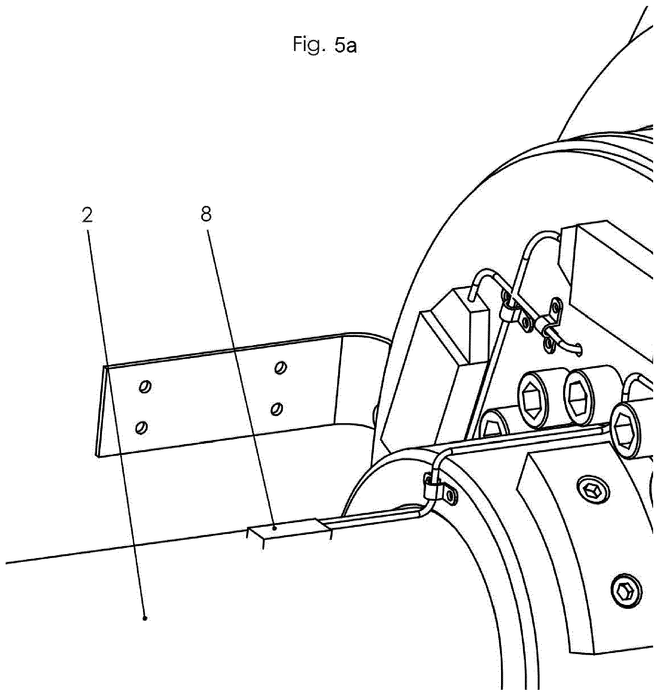

- Fig. 5: eine Detailvergrößerung einer erfindungsgemäßen Kupplung mit einer bevorzugten Position eines Drehmomentüberwachungsmittels;
- Fig. 5a: eine Detailvergrößerung einer erfindungsgemäßen Kupplung mit einer bevorzugten Position eines Drehmomentüberwachungsmittels;

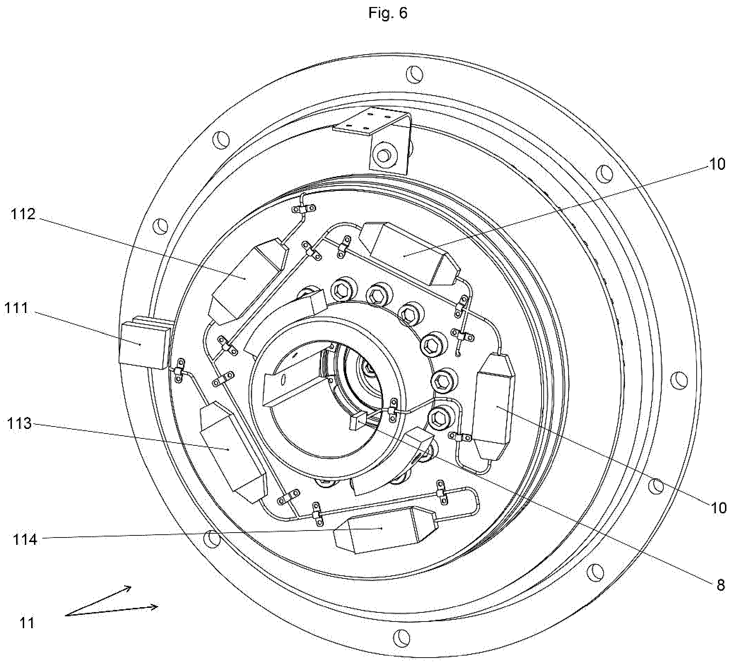

- Fig. 6: eine erfindungsgemäße Kupplung in einer perspektivischen Ansicht mit Komponenten einer Datenübertragungseinrichtung;

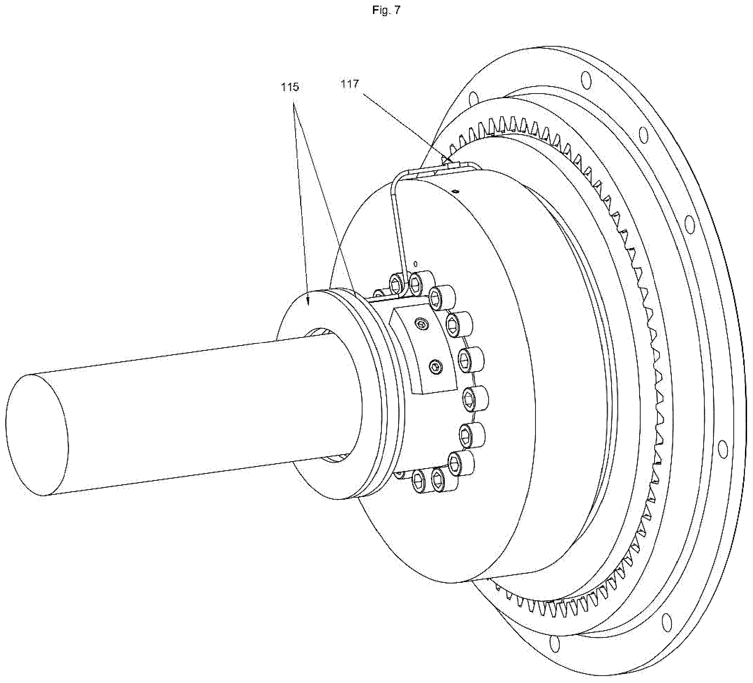

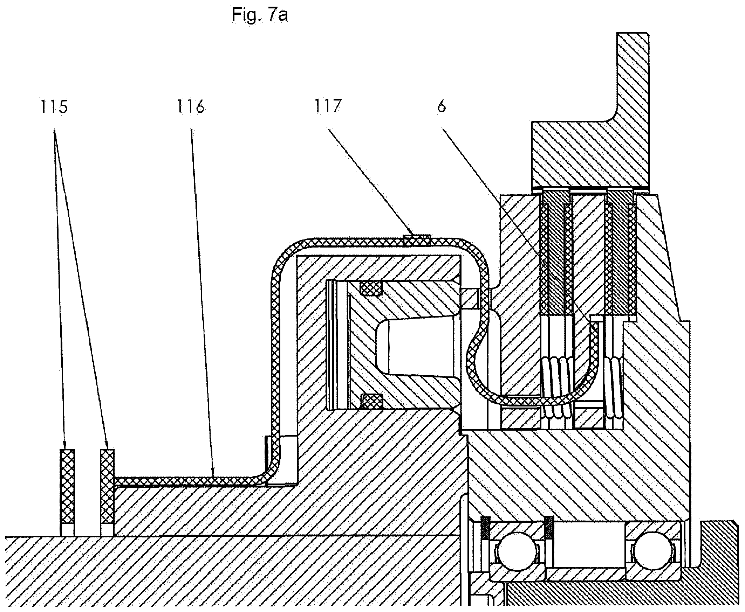

- Fig. 7: eine erfindungsgemäße Kupplung in einer perspektivischen Ansicht mit Komponenten einer Datenübertragungseinrichtung;
- Fig. 7a: eine erfindungsgemäße Kupplung in einer perspektivischen Ansicht mit Komponenten einer Datenübertragungseinrichtung;

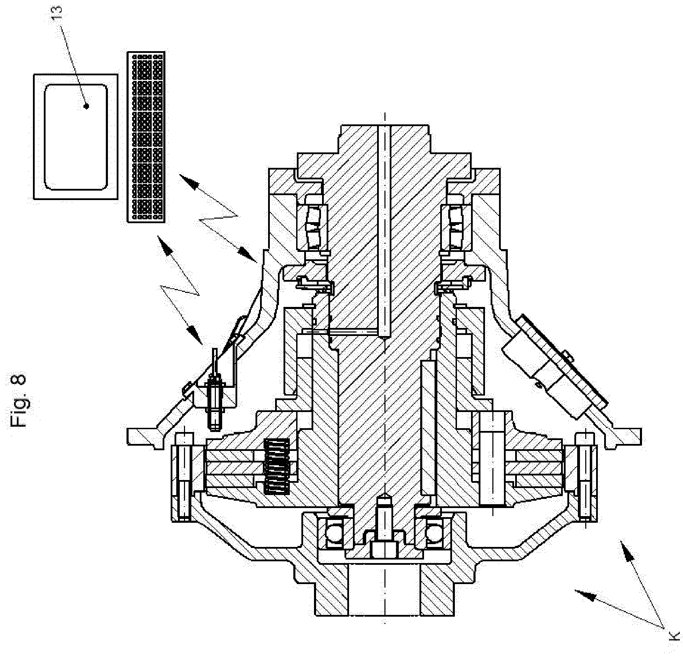

- Fig. 8: eine erfindungsgemäße Kupplungsanordnung;

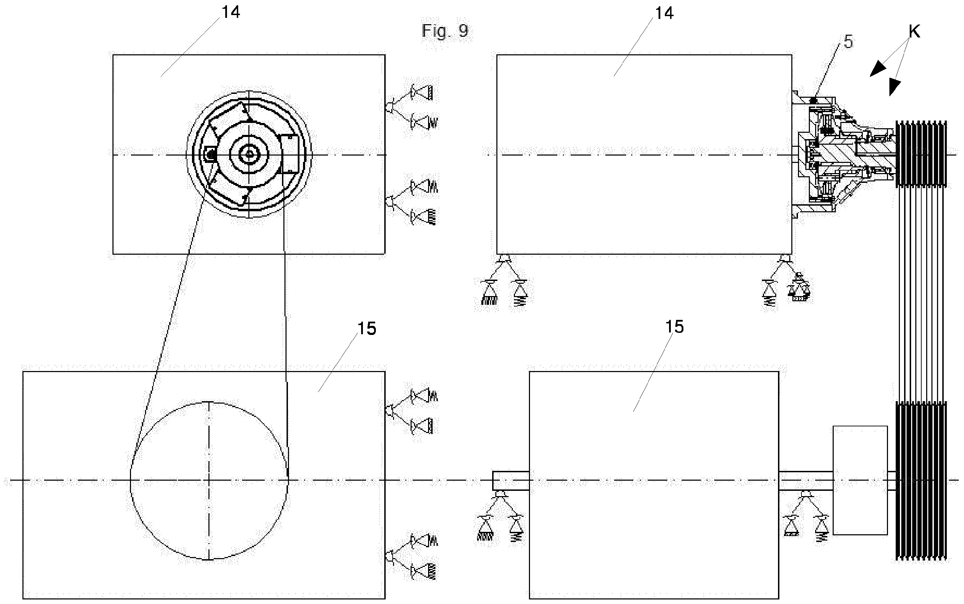

- Fig. 9: eine erfindungsgemäße Arbeitsmaschine.

Folgende Bezugszeichen werden in den Abbildungen verwendet:
- K: Kupplung
1 Eingangswelle
2 Ausgangswelle
3 Kupplungsmittel
4 Schaltmittel
5 Gehäuse / Maschinenrahmen
6 Temperaturüberwachungsmittel
7 Drucküberwachungsmittel
8 Drehmomentüberwachungsmittel
9 Reibbelagsverschleißüberwachungsmittel
10 Sensorsignalverstärker
11 Datenübertragungseinrichtung
12 Weg-, Abstand- und/oder Positionsüberwachungsmittel
13 Auswerteeinrichtung
14 Antriebsmittel
15 Arbeitsmittel
- 31: erste Druckscheibe
- 32: zweite Druckscheibe
- 33: Bolzen
- 34: Öffnung
- 35: Feder
- 36: Zahnkranz
- 37: Kupplungsscheibe
- 38: Innenscheibe
- 39: Öffnung

- 41: Zylinder
- 42: Kolben

- 91: Träger
- 92: Gleitkontakt

- 111: Induktive Datenübertragung- und Stromversorgungsmittel
- 112: Datenübertragungsmittel
- 113: induktive Stromversorgung
- 114: Gebermodul
- 115: Antenne
- 116: Hochfrequenzkabel
- 117: Steckverbindung

Eine Kupplung, insbesondere eine schaltbare und fremdbetätigte Kupplung, umfasst im Wesentlichen ein Drehmomenteingangsmittel 1, ein Drehmomentausgangsmittel 2, ein Kupplungsmittel 3, ein Schaltmittel 4 und vorzugsweise ein Gehäuse oder Maschinenrahmen 5.

Das Drehmomenteingangsmittel, als auch das Drehmomentausgangsmittel kann beispielsweise als Welle, Hohlwelle, Flansch, etc. ausgestaltet sein. Im Wesentlichen sollen die vorgenannten Mittel dazu eingerichtet sein, ein Drehmoment in die Kupplung einzuleiten bzw. abzuleiten. Als Synonym für das Drehmomenteingangsmittel bzw. Drehmomentausgangsmittel soll nachfolgend von Eingangswelle 1 und Ausgangswelle 2 gesprochen werden.

Das Kupplungsmittel 3 ist zwischen der Eingangswelle 1 und der Ausgangswelle 2 angeordnet. Das Kupplungsmittel 3 ist dazu eingerichtet, den Drehmomentfluss zwischen der Eingangswelle 1 und der Ausgangswelle 2 wahlweise ein- oder auszuschalten. Je nach Bauweise des Kupplungsmittels 3 sind auch Drehmomentreduzierungen, beispielsweise eine schleifendes oder rutschendes Kupplungsmittel, möglich.

Das Kupplungsmittel 3 kann beispielsweise eine erste Druckscheibe 31 und eine zweite Druckscheibe 32 umfassen, wobei die erste Druckscheibe 31 beispielsweise fest mit der Ausgangswelle 2 verbunden ist und die zweite Druckscheibe 32 axial verschiebbar auf der Ausgangswelle 2 aufgenommen ist. Zudem kann die erste Druckscheibe 31 mit mindestens einem axial ausgerichteten Bolzen 33, vorzugsweise mehreren Bolzen, und die zweite Druckscheibe mit mindestens einer korrespondierenden Öffnung 34, vorzugsweise mehreren Öffnungen, für die Bolzen ausgestattet sein. Auch kann mindestens eine Feder 35, vorzugsweise mehrere Federn, zwischen den Druckscheiben 31, 32 angeordnet sein.

Ferner kann das Kupplungsmittel einen Zahnkranz 36 und mindestens eine, vorzugsweise auch mehrere Kupplungsscheiben 37 umfassen, wobei der Zahnkranz 36 fest mit der Eingangswelle 1 verbunden ist und die Kupplungsscheibe 37 axial verschiebbar, beispielsweise über eine Schiebeverzahnung, in dem Zahnkranz 36 aufgenommen ist.

Die Kupplungsscheibe 37 ist zwischen der ersten Druckscheibe 31 und der zweiten Druckscheibe 32 aufgenommen. Die Kupplungsscheibe 37 ist in der Regel mit einem Reibbelag zur Erreichung eines hohen Reibwertes ausgestattet. Es können auch mehrere Kupplungsscheiben 37 vorgesehen sein, wobei in diesem Fall vorzugsweise zwischen zwei Kupplungsscheiben je eine Innenscheibe 38 vorgesehen ist. Die Innenscheibe 38 ist vorzugsweise axial verschiebbar auf der Ausgangswelle 2 aufgenommen. Vorzugsweise weist die Innenscheibe 38 Öffnungen 39 auf, durch welche die Bolzen 33 hindurchragen können.

Das Schaltmittel 4 kann beispielsweise als Zylinder-Kolben-Kombination, umfassend einen Zylinder 41 und einen Kolben 42, ausgestaltet sein, welche hydraulisch betrieben wird. Denkbar sind aber auch weitere geeignete Schaltmittel, beispielsweise auf mechanischer, elektrischer und/oder pneumatischer Basis.

Über das Schaltmittel 4 bzw. den Kolben 42 kann die zweite Druckscheibe 32 verschoben werden, so dass die Kupplungsscheibe 37 bzw. die Kupplungsscheiben wahlweise einen Reibschluss mit den den Druckscheiben 31, 32 bzw. den Innenscheiben 38 eingehen oder nicht. Anders ausgedrückt das Schaltmittel schaltet die Kupplung ein oder aus.

In der Regel ist die Feder 35 zwischen den Druckscheiben 31, 32 vorgesehen, welche die Druckscheiben auseinanderdrückt. In einem Ausgangszustand ist die Kupplung geöffnet und wird durch Betätigung des Schaltmittels 4 geschlossen. Es ist aber auch der andere Fall denkbar, dass die Druckscheiben 31, 32 beispielsweise über eine Tellerfeder (nicht dargestellt) zusammengedrückt werden und das Schaltmittel die Kupplung öffnet.

Die Ausführungsmöglichkeiten der Kupplung sind überaus zahlreich, dem Fachmann jedoch hinreichend bekannt.

Es ist ferner vorzugsweise vorgesehen, dass die Kupplung ein Gehäuse 5 oder Maschinenrahmen umfasst, das bzw. der in der Regel ortsfest angebracht ist. In den hier vorliegenden Abbildungen ist lediglich ein Halter dargestellt, der letztendlich ortsfest an dem Gehäuse oder Maschinenrahmen angebracht ist.

Erfindungsgemäß ist vorgesehen, dass die Kupplung mit mindestens einem Zustandsüberwachungsmittel ausgestattet ist.

Das Zustandsüberwachungsmittel ist grundsätzlich dazu eingerichtet, den Zustand einzelner Komponenten der Kupplung zu detektieren. Das Zustandsüberwachungsmittel kann auch als Sensor angesprochen werden. Hier sind verschiedene Ansätze denkbar.

Als bevorzugte Zustandsüberwachungsmittel kommen insbesondere Temperaturüberwachungsmittel 6, Drucküberwachungsmittel 7, Reibbelagsverschleißüberwachungsmittel 8 und / oder Drehmomentüberwachungsmittel 9 in Frage. Auch Weg-, Abstand- und/oder Positionsüberwachungsmittel 12 sind denkbar.

Bei dem Temperaturüberwachungsmittel 6 kann es sich beispielsweise um ein Widerstandsthermometer, ein Thermoelement, ein Infrarot-Thermometer und/oder ein Thermometer handeln. Ein Thermoelement umfasst ein Paar metallischer Leiter aus unterschiedlichem Material, die an einem Ende verbunden sind und aufgrund des thermoelektrischen Effektes zur Temperaturmessung geeignet sind.

Bei dem Drucküberwachungsmittel 7 kann es sich beispielsweise um einen induktiven Drucksensor, piezoresistiven Drucksensor, einen kapazitiven Drucksensor und/oder einen Drucksensor mit Hallelement handeln.

Bei dem Drehmomentüberwachungsmittel 8 kann es sich beispielsweise um einen Dehnungsmessstreifen, einen Kraftsensor und/oder einen auf Magnetostriktion beruhenden Sensor handeln.

Bei dem Reibbelagsverschleißüberwachungsmittel 9 kann es sich beispielsweise um einen induktiven Wegaufnehmer, einen kapazitiven Wegaufnehmer, ein Potentiometer, eine Messunterlegscheibe, eine optische Distanzmessung und/oder ein mechanisches System handeln.

Bei dem Weg-, Abstand- und/oder Positionsüberwachungsmittel 12 kann es sich um einen induktiven Wegaufnehmer, einen kapazitiven Wegaufnehmer, ein Potentiometer, eine Messunterlegscheibe, eine optische Distanzmessung und/oder ein mechanisches System handeln. Das Reibbelagsverschleißüberwachungsmittel 9 kann gleichzeitig ein Weg-, Abstand- und/oder Positionsüberwachungsmittel 12 sein bzw. vice versa.

Zur Übertragung der von den Zustandsüberwachungsmitteln detektierten Daten kann die Kupplung mit jeweils zugeordneten Übertragungsmitteln ausgestattet sein.

Das Übertragungsmittel kann beispielsweise auf den Prinzipien SAW, Telemetrie und/oder Funk beruhen. Entsprechend kann es sich bei dem Übertragungsmittel beispielsweise um SAW-, Telemetrie und/oder Funkmittel handeln.

Das Zustandsüberwachungsmittel und das Übertragungsmittel können in einem gemeinsamen Gehäuse untergebracht sein.

Als mögliche Montagepositionen für die einzelnen Zustandsüberwachungsmittel kommen unterschiedliche Stellen der Kupplung in Frage.

So kann beispielsweise vorgesehen sein, dass das Temperaturüberwachungsmittel 6 auf der Innenscheibe 38, insbesondere auf der hinteren, der vom Kolben am weitesten entfernten Innenscheibe, angebracht ist. Hier sind die höchsten Temperaturen in der Kupplung zu erwarten, so dass die Temperaturmessung an dieser Stelle besonders aussagekräftig ist. Auch sind Temperaturüberwachungsmittel auf Infrarot Basis denkbar, welche Temperaturen der Kupplungsbauteile sogar von außen, sprich ohne direkten Kontakt, detektieren können. Die Temperaturmessung erfolgt letztendlich berührungslos und es sind spezielle Ausführungen für explosionsgefährdete Bereiche verfügbar. Das auf Infrarot basierende Temperaturüberwachungsmittel stellt eine kostengünstige Lösung dar und ist für explosionsgefährdete Bereiche zertifiziert.

Es kann ferner vorgesehen sein, dass das Drucküberwachungsmittel 7 an die Zylinder-Kolben-Kombination angeschlossen ist, insbesondere mit dem Zylinder 41 in einer zur Druckübertragung geeigneten Verbindung steht.

So kann ferner vorgesehen sein, dass das Drehmomentüberwachungsmittel 8 dem Drehmomenteingangsmittel 1 und/oder Drehmomentausgangsmittel 2 verbunden ist, insbesondere, dass das Drehmomentüberwachungsmittel als Dehnungsmesstreifen ausgestaltet ist und dass der Dehnungsmessstreifen auf dem als Eingangswelle 1 bzw. Ausgangswelle 2 ausgestalteten Drehmomenteingangsmittel bzw. Drehmomentausgangsmittel aufgebracht ist. Vorzugsweise werden die auftretenden Drehmomente in Echtzeit gemessen. Das Drehmomentüberwachungsmittel 8 kann auch auf der Eingangswelle 1 bzw. Ausgangswelle 2 vergossen sein, damit es für eine raue Umgebung geeignet ist. Soweit die Kupplung in einer Arbeitsmaschine verbaut ist, wird eine Drehmomentmessung direkt am Hauptantriebsstrang der Arbeitsmaschine ermöglicht.

Es kann ferner vorgesehen sein, dass das Reibbelagsverschleißüberwachungsmittel 9 an dem Gehäuse 5 bzw. Maschinenrahmen angebracht ist. Im Wesentlichen kann das Reibbelagsverschleißüberwachungsmittel dazu eingerichtet sein, den Abstand zwischen sich und der zweiten Druckscheibe 32 und/oder den Abstand der Druckscheiben 31, 32 zu messen, woraus dann letztendlich auf die Dicke der Kupplungsscheiben 37 ggf. auch der Druckscheiben 31, 32 und/oder Innenscheiben 38 geschlossen werden kann.

So kann ferner vorgesehen sein, dass das Reibbelagsverschleißüberwachungsmittel 9 ein an dem Zylinder und ein an der zweiten Druckscheibe angebrachtes Element umfasst. So kann beispielsweise das Reibbelagsverschleißüberwachungsmittel als Potentiometer ausgestaltet sein, umfassend einen elektrisch nichtleitenden Träger 91, auf dem ein Widerstandsmaterial aufgebracht ist, und einen Gleitkontakt 92. Der Träger kann beispielsweise auf dem Zylinder 41 angebracht sein und der Gleitkontakt entsprechend mit der zweiten Druckscheibe 32 verbunden sein. Diese Anordnung lässt sich entsprechend auch vice versa ausgestalten.

Grundsätzlich sind auch weitere Zustandsüberwachungsmittel denkbar, wie beispielsweise ein Drehzahlüberwachungsmittel, Mittel zur Überwachung der Schwingungen, sprich Schwingungsmessung um beispielsweise Lagerschäden oder Verzahnungsschäden im Vorfeld zu einem Ausfall zu detektieren.

Die einzelnen Zustandsüberwachungsmittel können mit Sensorsignalverstärkern 10 ausgestattet sein, um die jeweiligen Signale in geeigneter Weise zu verstärken.

Zur Übertragung der durch die Zustandsüberwachungsmittel detektierten Zustände ist vorzugsweise eine Datenübertragungseinrichtung 11 vorgesehen.

Als Prinzipien für die Datenübertragungseinrichtung kommen beispielsweise Nahfeldtelemetrie per Funk, Surface Acoustic Wave (SAW) oder auch alternative Systeme in Frage.

Bei der Nahfeldtelemetrie wird die Übertragung der Messdaten mittels Funk gewährleistet. Die Datenübertragung kann von der rotierenden auf die ortsfeste Seite der Kupplung erfolgen. Die Stromversorgung auf die rotierende Seite kann mittels Induktion erfolgen. Die Datenübertragung kann via Funk oder Induktion erfolgen. Es werden grundsätzlich alle Arten passiver Sensoren unterstützt. Ein auf Nahfeldtelemetrie basierendes System stellt ein an die Messaufgabe angepasstes System dar. Grundsätzlich umfasst ein auf Nahfeldtelemetrie basierendes System für den Dauereinsatz konzipierte Komponenten auf. Ein auf Nahfeldtelemetrie basierendes System ist sehr flexibel anpassbar.

So kann die Datenübertragungseinrichtung in Form eines auf Nahfeldtelemetrie basierendes System beispielsweise eine ortsfeste Anordnung und ein den drehenden Komponenten der Kupplung zugeordnete Anordnung umfassen.

Die ortsfeste Anordnung kann beispielsweise ein induktives Datenübertragungs- und Stromversorgungsmittel 111 umfassen. Die den drehenden Komponenten der Kupplung zugeordnete Anordnung kann ein induktives Datenübertragungsmittel 112, eine induktive Stromversorgung 113 und ein Gebermodul 114 umfassen. Das induktive Datenübertragungs- und Stromversorgungsmittel 111 ist vorzugsweise an dem ortsfesten Gehäuse 5 bzw. Maschinenrahmen angebracht, während das induktive Datenübertragungsmittel 112, die induktive Stromversorgung 113 und das Gebermodul 114 insbesondere an einem drehenden Element der Kupplung, beispielsweise außen an dem Zylinder 41 angebracht ist.

Bei einer auf Surface Acoustic Wave (SAW) basierenden Datenübertragungseinrichtung werden die SAW-Elemente von außen über Funk angeregt, worauf sie mit einem spezifischen Signal antworten, vergleichbar mit einem Echo. Die durch den Sendeimpuls zugeführte Energie reicht für eine Antwort des Elementes aus, vergleichbar mit radio-frequency identification (RFID). Eine auf Surface Acoustic Wave (SAW) basierenden Datenübertragungseinrichtung weist vorteilhafterweise eine geringe Komplexität sowie einfache Bauteile auf. Es ist ferner relativ unempfindlich gegenüber äußeren Einflüssen und vergleichsweise günstig.

Eine auf SAW basierenden Datenübertragungseinrichtung kann beispielsweise eine Antenne 115 bzw. Antennen, ein Hochfrequenzkabel 116, eine Steckverbindung 117 und ein Zustandsüberwachungsmittel umfassen. Das Zustandsüberwachungsmittel kann beispielsweise als Temperaturüberwachungsmittel ausgestaltet sein und an der Innenscheibe angebracht sein.

Eine ebenfalls erfindungsgemäße Kupplungsanordnung umfasst im Wesentlichen eine erfindungsgemäße Kupplung und eine Auswerteeinrichtung.

Die von den Zustandsüberwachungsmitteln ermittelten Daten bzw. die von der Datenübertragungseinrichtung übermittelten Daten werden an die Auswerteeinrichtung (13), beispielsweise einen Computer, geschickt. Hier können die Daten entsprechend ausgewertet werden. Der Computer ist hierzu mit einer geeigneten Software ausgestattet.

Ferner kann die erfindungsgemäße Kupplungsanordnung bzw. Kupplung in eine Arbeitsmaschine, beispielsweise einen Extruder, einen Schiffsantrieb oder eine Straßenbaumaschine, integriert werden. Eine entsprechende Arbeitsmaschine umfasst entsprechend ein Antriebsmittel, beispielsweise einen Diesel- oder Elektromotor, die erfindungsgemäße Kupplungsanordnung bzw. Kupplung und ein drehend angetriebenes Arbeitsmittel, beispielsweise das Zerkleinerungswerk einer Straßenbaumaschine, den Antrieb eines Schiffes oder den Schneckenförderer eines Extruders.

So kann beispielsweise die Temperaturmessung durch die Temperaturüberwachungsmittel 6 eine sinnvolle Ergänzung einer bestehenden Schlupfüberwachung darstellen, insbesondere können die durch Mikroschlupf verursachten Temperaturen sicher überwacht werden. Mit anderen Worten, ist die Auswerteeinrichtung dazu eingerichtet, aus den Daten des Temperaturüberwachungsmittels 6 eine Überwachung des Schlupfes der Kupplung, insbesondere des Mikroschlupfes, zu generieren.

Es kann ferner über die von dem Reibbelagsverschleißüberwachungsmittel 9 gelieferten Daten eine Verschleißmessung der Kupplungsscheiben 37 vorgenommen werden. Mit den Daten der Reibbelagsverschleißüberwachungsmittel 9 kann eine zustandsorientierte Instandhaltung vorgenommen werden. Die Verschleißmessung kann beispielsweise wie folgt erfolgen. Mit dem beispielsweise als Wegaufnehmer ausgestalteten Reibbelagsverschleißüberwachungsmittel 9 wird der Weg beim Schalten der Kupplung gemessen. Bei der Inbetriebnahme der Kupplung bzw. der Maschine, in welcher die Kupplung verbaut ist, wird ein Referenzwert = Ursprungswert ausfallsicher und dauerhaft in der Auswerteeinrichtung bzw. Maschinensteuerung gespeichert. Bei jedem Schaltvorgang wird der Weg gemessen und mit dem Ursprungswert verglichen. Bei Erreichen des maximal zulässigen Weges bekommt der Maschinenbediener eine Meldung, dass der Verschleiß der Kupplungsscheiben 37 erreicht ist und die Kupplungsscheiben ausgewechselt werden müssen. Nach dem Austausch der Kupplungsscheiben sollte bzw. muss der Ursprungswert neu eingestellt werden. Letztendlich ist die Auswerteeinrichtung in diesem Zusammenhang dazu eingerichtet, einen Instandhaltungsplan in Abhängigkeit von dem tatsächlichen Verschleißzustand der Kupplungsscheiben zu generieren.

Aus dem Einsatz des Reibbelagsverschleißüberwachungsmittels bzw. der Auswertung der gelieferten Daten in der Auswerteeinrichtung ergeben sich einige Vorteile. So entsteht kein manueller Inspektionsaufwand, um den Verschleißzustand der Kupplungsscheiben zu ermitteln. Die Beschaffung der Kupplungsscheiben kann rechtzeitig und geplant erfolgen. Ungeplante Stillstandzeiten durch unerwarteten Ausfall der Kupplungsscheiben im Fall von mangelnder Wartung bzw. Inspektion kann vermieden werden. Wartungs- oder Inspektionsintervalle werden besser planbar. Es wird die Möglichkeit von "Condition Monitoring" (vorbeugende Instandhaltung bzw. kontinuierliche Zustandsüberwachung) eröffnet.

Über die von den Drehmomentüberwachungsmittel 8 gelieferten Daten kann das gemessene Drehmoment zur Optimierung oder Regelung der Maschinenauslastung genutzt werden. Insbesondere kann eine Optimierung des Betriebspunktes eines Dieselmotors in Abhängigkeit der tatsächlichen Leistung im Hauptantriebsstrang vorgenommen werden, sofern die Kupplung entsprechend in einer Arbeitsmaschine verbaut ist, die von einem Dieselmotor angetrieben wird. Es wird die Möglichkeit zur Erstellung einer Belastungshistorie eröffnet. Es wird die Möglichkeit von "Condition Monitoring" eröffnet.

## Patentansprüche

1. Arbeitsmaschine, umfassend ein Antriebsmittel (14), eine Kupplungsanordnung und ein Arbeitsmittel (15), wobei die Kupplungsanordnung eine Kupplung (K) und eine Auswerteeinrichtung (13) umfasst, wobei
die Kupplung (K) ein Drehmomenteingangsmittel (1), ein Drehmomentausgangsmittel (2), ein Kupplungsmittel (3) und ein Schaltmittel (4) umfasst, wobei die Kupplung mit mindestens einem Zustandsüberwachungsmittel ausgestattet ist,
wobei das Zustandsüberwachungsmittel als mindestens ein Reibbelagsverschleissüberwachungsmittel ausgestaltet ist,
**dadurch gekennzeichnet, dass**
die Auswerteeinrichtung (13) dazu eingerichtet ist, aus den Daten des Reibbelagsverschleißüberwachungsmittels (9) einen Instandhaltungsplan in Abhängigkeit von dem tatsächlichen Verschleißzustand der Kupplungsscheiben (37) zu generieren.

2. Arbeitsmaschine nach Anspruch 1, **dadurch gekennzeichnet, dass** es sich bei der Arbeitsmaschine um einen Extruder, Schiffsantrieb oder Straßenbaumaschine handelt.

3. Arbeitsmaschine nach mindestens einem der vorhergehenden Ansprüche, **dadurch gekennzeichnet, dass** es sich bei der Kupplung um eine schaltbare und fremdbetätigte Kupplung handelt.

4. Arbeitsmaschine nach mindestens einem der vorhergehenden Ansprüche, **dadurch gekennzeichnet, dass** das Zustandsüberwachungsmittel zusätzlich und fakultativ als
- Temperaturüberwachungsmittel (6),
- Drucküberwachungsmittel (7),
- Drehmomentüberwachungsmittel (8),
-
- Drehzahlüberwachungsmittel
- Schwingungsüberwachungsmittel und/oder
- Weg-, Abstand- und/oder Positionsüberwachungsmittel (12) ausgestaltet ist.

5. Arbeitsmaschine nach mindestens einem der vorhergehenden Ansprüche, **dadurch gekennzeichnet, dass** das Drehmomenteingangsmittel (1) und/oder das Drehmomentausgangsmittel (2) als Welle, Hohlwelle oder Flansch ausgestaltet ist.

6. Arbeitsmaschine nach mindestens einem der vorhergehenden Ansprüche, **dadurch gekennzeichnet, dass**
- das Kupplungsmittel eine erste Druckscheibe (31) und eine zweite Druckscheibe (32) umfasst, wobei
- die erste Druckscheibe 31 fest mit dem Drehmomentausgangsmittel (2) verbunden ist und die zweite Druckscheibe (32) axial verschiebbar auf dem Drehmomentausgangsmittel (2) aufgenommen ist,
- wobei das Kupplungsmittel einen Zahnkranz 36 und mindestens eine, vorzugsweise auch mehrere Kupplungsscheiben (37) umfasst, wobei der Zahnkranz (36) fest mit dem Drehmomenteingangsmittel (1) verbunden ist und die Kupplungsscheibe (37) axial verschiebbar, beispielsweise über eine Schiebeverzahnung, in dem Zahnkranz (36) aufgenommen ist, wobei
- die mindestens eine Kupplungsscheibe (37) zwischen der ersten Druckscheibe (31) und der zweiten Druckscheibe (32) aufgenommen ist, wobei
- die Kupplung mit einem Schaltmittel (4) ausgestattet ist, welches zur Bewegung der zweiten Druckscheibe (32) eingerichtet ist.

7. Arbeitsmaschine nach mindestens einem der vorhergehenden Ansprüche, **dadurch gekennzeichnet, dass** die Kupplung mit mindestens einer Innenscheibe (38) ausgestattet ist, die jeweils zwischen zwei Kupplungsscheiben (37) angeordnet ist und axial verschiebbar auf dem Drehmomentausgangsmittel (2) aufgenommen ist.

8. Arbeitsmaschine nach mindestens einem der vorhergehenden Ansprüche, **dadurch gekennzeichnet, dass** das Schaltmittel (4) als Zylinder-Kolben-Anordnung ausgestaltet ist, umfassend einen Zylinder (41) und einen Kolben (42).

9. Arbeitsmaschine nach mindestens einem der vorhergehenden Ansprüche, **dadurch gekennzeichnet, dass** die Kupplung mit einem ortsfesten Gehäuse oder Maschinenrahmen (5) ausgestattet ist.

10. Arbeitsmaschine nach mindestens einem der vorhergehenden Ansprüche, **dadurch gekennzeichnet, dass** das Temperaturüberwachungsmittel (6) an der Innenscheibe (38), insbesondere an der von dem Kolben (42) am weitesten entfernten Innenscheibe (38), angebracht ist.

11. Arbeitsmaschine nach mindestens einem der vorhergehenden Ansprüche, **dadurch gekennzeichnet, dass** die Kupplung mit einer Datenübertragungseinrichtung (11) ausgestattet ist.

12. Arbeitsmaschine nach mindestens einem der vorhergehenden Ansprüche, **dadurch gekennzeichnet, dass** die Auswerteeinrichtung (13) dazu eingerichtet ist, aus den Daten des Temperaturüberwachungsmittels (6) eine Überwachung des Schlupfes der Kupplung, insbesondere des Mikroschlupfes, vorzunehmen.

13. Arbeitsmaschine nach mindestens einem der vorhergehenden Ansprüche, **dadurch gekennzeichnet, dass** die Auswerteeinrichtung (13) dazu eingerichtet ist, aus den Daten des mittels des Drehmomentüberwachungsmittels (8) gemessenen Drehmoment eine Optimierung der Auslastung eines Antriebsmittel (14) einer Arbeitsmaschine vorzunehmen.

14. Arbeitsmaschine nach mindestens einem der vorhergehenden Ansprüche, **dadurch gekennzeichnet, dass** es sich bei dem Arbeitsmittel (15) um das Zerkleinerungswerk einer Straßenbaumaschine, den Antrieb eines Schiffes oder den Schneckenförderer eines Extruders handelt.

## Claims

1. Work machine, comprising a drive means (14), a clutch arrangement and a working means (15), wherein the clutch arrangement comprises a clutch (K) and an evaluation device (13), wherein
the clutch (K) comprises a torque input means (1), a torque output means (2), a clutch means (3) and a shift means (4), wherein the clutch is provided with at least one condition monitoring means, wherein the condition monitoring means is configured as at least one friction lining wear monitoring means,
**characterised in that**
the evaluation device (13) is adapted to generate a maintenance plan from the data of the friction lining wear monitoring means (9) in dependence on the actual state of wear of the clutch discs (37).

2. Work machine according to claim 1, **characterised in that** the work machine is an extruder, a drive unit of a ship or a road construction machine.

3. Work machine according to at least one of the preceding claims, **characterised in that** the clutch is a shiftable and externally operated clutch.

4. Work machine according to at least one of the preceding claims, **characterised in that** the condition monitoring means is additionally and optionally configured as
- temperature monitoring means (6),
- pressure monitoring means (7),
- torque monitoring means (8),
- rotational speed monitoring device
- vibration monitoring means and/or
- path, distance and/or position monitoring means (12).

5. Work machine according to at least one of the preceding claims, **characterised in that** the torque input means (1) and/or the torque output means (2) is configured as a shaft, hollow shaft or flange.

6. Work machine according to at least one of the preceding claims, **characterised in that**
- the clutch means comprises a first pressure disc (31) and a second pressure disc (32), wherein
- the first pressure disc (31) is fixedly connected to the torque output means (2) and the second pressure disc (32) is received on the torque output means (2) in an axially displaceable manner,
- wherein the clutch means comprises a gear rim (36) and at least one, and preferably several, clutch discs (37), wherein the gear rim (36) is fixedly connected to the torque input means (1) and the clutch disc (37) is received in the gear rim (36) in an axially displaceable manner, for example via a sliding gear, wherein
- the at least one clutch disc (37) is received between the first pressure disc (31) and the second pressure disc (32), wherein
- the clutch is equipped with a shift means (4) which is adapted to move the second pressure disc (32).

7. Work machine according to at least one of the preceding claims, **characterised in that** the clutch is equipped with at least one inner disc (38), each of which is arranged between two clutch discs (37) and is received on the torque output means (2) in an axially displaceably manner.

8. Work machine according to at least one of the preceding claims, **characterised in that** the shift means (4) is configured as a cylinder-piston arrangement comprising a cylinder (41) and a piston (42).

9. Work machine according to at least one of the preceding claims, **characterised in that** the clutch is equipped with a stationary housing or machine frame (5).

10. Work machine according to at least one of the preceding claims, **characterised in that** the temperature monitoring means (6) is mounted on the inner disc (38), in particular on the inner disc (38) furthest from the piston (42).

11. Work machine according to at least one of the preceding claims, **characterised in that** the clutch is equipped with a data transmission device (11).

12. Work machine according to at least one of the preceding claims, **characterised in that** the evaluation device (13) is adapted to monitor the slip of the clutch, in particular the micro-slip, from the data of the temperature monitoring means (6).

13. Work machine according to at least one of the preceding claims, **characterised in that** the evaluation device (13) is adapted to carry out an optimisation of the utilisation of a drive means (14) of a work machine from the data of the torque measured by means of the torque monitoring means (8).

14. Work machine according to at least one of the preceding claims, **characterised in that** the working means (15) is the crushing unit of a road construction machine, the drive unit of a ship or the screw conveyor of an extruder.

## Revendications

1. Machine, comprenant un moyen d'entraînement (14), un dispositif d'embrayage et un moyen de travail (15), dans laquelle le dispositif d'embrayage comprend un embrayage (K) et un dispositif d'évaluation (13), dans laquelle l'embrayage (K) comprend un moyen d'entrée de couple (1), un moyen de sortie de couple (2), un moyen d'embrayage (3) et un moyen de commutation (4), dans laquelle
l'embrayage est équipé d'au moins un moyen de surveillance d'état, dans laquelle le moyen de surveillance d'état est réalisé sous la forme d'au moins un moyen de surveillance d'usure de garniture de friction,
**caractérisée en ce que** le dispositif d'évaluation (13) est conçu pour générer à partir des données du moyen de surveillance d'usure de garniture de friction (9) un plan de maintenance en fonction de l'état d'usure réel des disques d'embrayage (37).

2. Machine selon la revendication 1, **caractérisée en ce que** la machine est une extrudeuse, une propulsion de bateau ou une machine de construction de routes.

3. Machine selon au moins l'une quelconque des revendications précédentes, **caractérisée en ce que** l'embrayage est un embrayage commutable et actionné de l'extérieur.

4. Machine selon au moins l'une quelconque des revendications précédentes, **caractérisée en ce que** le moyen de surveillance d'état est réalisé en plus et de manière facultative sous forme de
- moyen de surveillance de température (6),
- moyen de surveillance de pression (7),
- moyen de surveillance de couple (8),
- moyen de surveillance de vitesse de rotation,
- moyen de surveillance d'oscillation et/ou
- moyen de surveillance de parcours, distance et/ou position (12).

5. Machine selon au moins l'une quelconque des revendications précédentes, **caractérisée en ce que** le moyen d'entrée de couple (1) et/ou le moyen de sortie de couple (2) est réalisé sous forme d'arbre, d'arbre creux ou de bride.

6. Machine selon au moins l'une quelconque des revendications précédentes, **caractérisée en ce que**
- le moyen d'embrayage comprend un premier disque de pression (31) et un deuxième disque de pression (32),
- dans laquelle le premier disque de pression (31) est assemblé de manière fixe au moyen de sortie de couple (2) et le deuxième disque de pression (32) est monté de manière à pouvoir être déplacé axialement sur le moyen de sortie de couple (2),
- dans laquelle le moyen d'embrayage comprend une couronne dentée (36) et au moins un disque d'embrayage (37), de préférence aussi plusieurs disques d'embrayage, dans laquelle la couronne dentée (36) est assemblée de manière fixe au moyen d'entrée de couple (1) et le disque d'embrayage (37) est monté de manière à pouvoir être déplacé axialement, par exemple par l'intermédiaire d'une denture de translation, dans la couronne dentée (36),
- dans laquelle l'au moins un disque d'embrayage (37) est monté entre le premier disque de pression (31) et le deuxième disque de pression (32),
- dans laquelle l'embrayage est équipé d'un moyen de commutation (4) qui est conçu pour le déplacement du deuxième disque de pression (32).

7. Machine selon au moins l'une quelconque des revendications précédentes, **caractérisée en ce que** l'embrayage est équipé d'au moins un disque intérieur (38) qui est agencé à chaque fois entre deux disques d'embrayage (37) et qui est monté de manière à pouvoir être déplacé axialement sur le moyen de sortie de couple (2).

8. Machine selon au moins l'une quelconque des revendications précédentes, **caractérisée en ce que** le moyen de commutation (4) est conçu sous forme de système cylindre-piston, comprenant un cylindre (41) et un piston (42).

9. Machine selon au moins l'une quelconque des revendications précédentes, **caractérisée en ce que** l'embrayage est équipé d'un bâti ou châssis de machine (5) fixe.

10. Machine selon au moins l'une quelconque des revendications précédentes, **caractérisée en ce que** le moyen de surveillance de température (6) est placé au niveau du disque intérieur (38), en particulier au niveau du disque intérieur (38) le plus éloigné du piston (42).

11. Machine selon au moins l'une quelconque des revendications précédentes, **caractérisée en ce que** l'embrayage est équipé d'un dispositif de transmission de données (11).

12. Machine selon au moins l'une quelconque des revendications précédentes, **caractérisée en ce que** le dispositif d'évaluation (13) est conçu pour effectuer à partir des données du moyen de surveillance de température (6) une surveillance du patinage de l'embrayage, en particulier du micropatinage.

13. Machine selon au moins l'une quelconque des revendications précédentes, **caractérisée en ce que** le dispositif d'évaluation (13) est conçu pour effectuer à partir des données du couple mesuré par le moyen de surveillance de couple (8) une optimisation de la charge d'un moyen d'entraînement (14) d'une machine.

14. Machine selon au moins l'une quelconque des revendications précédentes, **caractérisée en ce que** le moyen de travail (15) est un outil de broyage d'une machine de construction de routes, la propulsion d'un bateau ou le convoyeur à vis d'une extrudeuse.
